# EUROPEAN PATENT SPECIFICATION

(11) **EP 2 169 917 B1**
(45) Date of publication and mention of the grant of the patent: **02.11.2022**
(21) Application number: 08105420.7
(22) Date of filing: 24.09.2008
(51) Int. Cl.: H04L 61/2521

(54) **METHOD AND DEVICE FOR DATA PROCESSING IN A NETWORK COMPONENT AND COMMUNICATION SYSTEM COMPRISING SUCH DEVICE**
VERFAHREN UND VORRICHTUNG ZUR DATENVERARBEITUNG IN EINER NETZKOMPONENTEN UND KOMMUNIKATIONSSYSTEM, DAS EINE SOLCHE VORRICHTUNG UMFASST
PROCÉDÉ ET DISPOSITIF DE TRAITEMENT DE DONNÉES DANS UN COMPOSANT DE RÉSEAU ET SYSTÈME DE COMMUNICATION COMPRENANT UN TEL DISPOSITIF

(43) Date of publication of application: 31.03.2010
(73) Proprietor: ADTRAN GmbH, 10557 Berlin (DE)
(72) Inventor: Armbruster, Friedrich, 81379, München (DE)
(74) Representative: Brachmann, Roland W.

(56) References cited:
- US-A1- 2004 052 216
- EDITORS: M BORELLA COMMWORKS J LO CANDLESTICK NETWORKS CONTRIBUTORS: D GRABELSKY COMMWORKS G MONTENEGRO SUN MICROSYSTEMS: "Realm Specific IP: Framework; rfc3102.txt" IETF STANDARD, INTERNET ENGINEERING TASK FORCE, IETF, CH, 1 October 2001 (2001-10-01), XP015008883 ISSN: 0000-0003

## Description

The invention relates to a method and to a device for data processing in a network component and to a communication system comprising such a device.

Global public IPv4 addresses obtained from an IANA free pool are going to run out faster than expected. Actual forecasts predict that an exhaustion of such IPv4 addresses may yet be reached in 2010.

The problem of running short of IP addresses could be solved by a network address translation mechanism (NAT) as known in the art. A carrier NAT merges traffic from multiple subscribers into a single public IP address. This allows using a single IPv4 address for several subscribers. Utilizing such approach, e.g., up to 100 subscribers can be served via a single global IPv4 address.

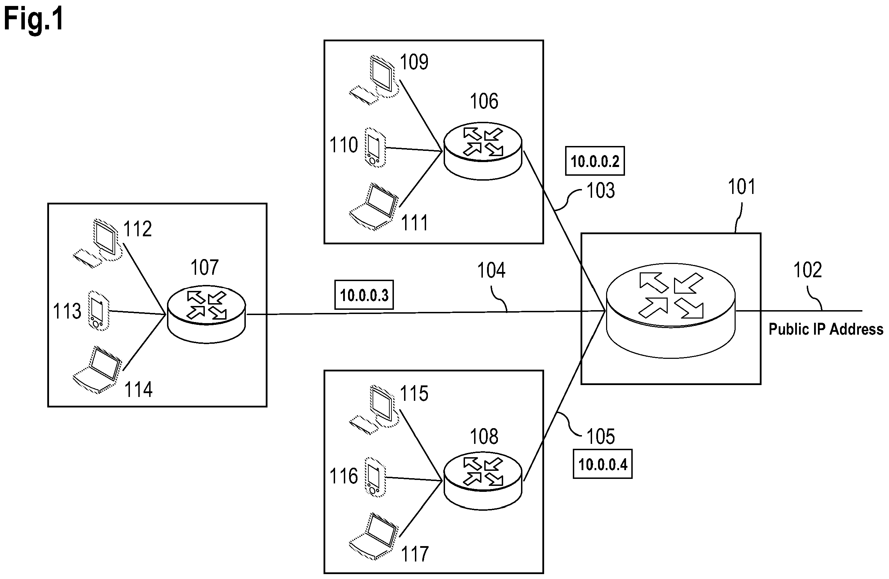

**Fig.1** shows a diagram comprising components of a network to visualize the NAT approach known in the art.

A carrier NAT device 101 is connected via a line 102 to a core network (not shown). The NAT device 101 is addressed by the core network via a public IP address. The NAT device 101 is further connected via a line 103 to a home router 106 at a first subscriber's home. The home router 106 is further connected to several devices 109 to 111 (PC, PDA, laptop) within the first subscriber's home. The NAT device 101 is further connected via a line 104 to a home router 107 at a second subscriber's home. The home router 107 is further connected to several devices 112 to 114 (PC, PDA, laptop) within the second subscriber's home. The NAT device 101 is further connected via a line 105 to a home router 108 at a third subscriber's home. The home router 108 is further connected to several devices 115 to 117 (PC, PDA, laptop) within the third subscriber's home.

The single public IPv4 address is translated by the carrier NAT device 101 to multiple subscribers, i.e. to the first to third subscribers shown in Fig.1. Each subscriber obtains a private IP address 10.0.0.2 to 10.0.0.4 from the carrier NAT device 101. Furthermore, each subscriber has several devices 109 to 117 and each home router 106 to 108 provides an encapsulated NAT functionality, translating the 10.0.0.x address supplied by the carrier NAT device 101 into a 192.168.1.x address.

Hence, two NAT routers are required to supply data from the backbone network to the device and vice versa.

These two stages of address translation within the subscriber's home and at the carrier generates a complex situation for applications to cope and compensate the drawbacks associated with NAT.

Although each home router may be a piece of low-cost equipment providing NAT, the NAT within the carrier's sphere (e.g., the carrier NAT device 101 in Fig.1) is a much more critical component. The NAT functionality described is an additional functionality provided by a carrier's server farm leading to a significant load which results in decreased processing time of user traffic and/or more expensive components to be deployed with the server farm to cope with said NAT. For example, if a server farm handles 100,000 subscribers with an average traffic volume of 2 Mbit/s for each subscriber, the traffic throughput for the server farm would amount to be 2times 200 Gbit/s for said 100,000 subscribers. Providing NAT for each subscriber would significantly add to the processing performance of the server farm.

Document Realm Specific IP: Framework; rfc3102.txt, M. Borella, J. Lo, D. Grabelsky, G. Montenegro, October 2001, IETF STANDARD, INTERNET ENGINEERING TASK FORCE, IETF, examines the general framework of Realm Specific IP (RSIP). RSIP is intended as a alternative to NAT in which the end-to-end integrity of packets is maintained.

The **problem** to be solved is to overcome the disadvantages as described above and in particular to provide an efficient way to cope with a limited number of (IP) addresses when conveying traffic to and from a large number of subscribers.

This problem is solved according to the features of the independent claims. Further embodiments result from the depending claims.

In order to overcome this problem, a method for data processing in a network component is provided, wherein a public IP address is mapped to a private IP address and a port information associated with a subscriber.

Said public IP address is an IP address that is provided to or for the network component. The public IP address may either be obtained by the network component from a network, e.g., the Internet or a DHCP server of the network, or it may be persistently set up with such public IP address.

The private IP address, however, is the IP address the network component uses in downstream direction, i.e., towards the subscribers attached and/or connected to said network component.

Furthermore, the subscriber may be a home router or any instance that is functionally operable with an IP address. In this sense, the subscriber may also be a component or entity like a line card, e.g., of or for a media gateway. Each line card may be connected to at least one VoIP processing unit, e.g., a VoIP telephone. The network component as well as the subscriber(s) may be arranged to process VoIP traffic, in particular conveyed via a real-time protocol (RTP).

Preferably, the information required for upstream and/or downstream mapping can be at least temporarily stored at the network component. For example, a data entry in a database or table may reference subscriber-relevant information, e.g., its MAC address and/or port information and/or IP address.

In an embodiment, said public IP address equals said private IP address.

Hence, the public IP address can be used together with said port information towards the subscribers.

The approach provided efficiently avoids NAT to be processed for all subscribers at said network component, in particular if a subscriber's device is capable of NAT. This avoids double address translation which otherwise would consume a significant amount of processing resources at the network component.

In another embodiment, the private IP address is supplied to the subscriber together with said port information.

In a further embodiment, said port information comprises at least one TCP/UDP port, in particular a range or TCP/UDP ports.

Said TCP/UDP information is used to identify the particular subscriber connected to the network element.

In a next embodiment, the private IP address is conveyed to and/or used to address several subscribers connected to the network component.

Hence, the same (private) IP address is used by a group of subscribers or by all subscribers connected to the network component.

It is also an embodiment that the network component is connected to a network, in particular to the Internet or to an edge router of the Internet.

Pursuant to another embodiment, said public IP address is an IPv4 address, which is in particular assigned to the network component by the network.

According to an embodiment, said public IP address is provided from the network or from a carrier or from an operator, in particular from a DHCP server of the network.

According to another embodiment, the network component processes VoIP data.

In yet another embodiment, the network component performs NAT for a subscriber that is not capable of processing NAT.

Hence, the network component supplies both, NAT-capable and non NAT-capable subscribers. For those subscribers that are not able to translate addresses, the network component may provide NAT services.

According to a next embodiment, the network component confers with the subscriber whether it is capable processing NAT.

This can be done, e.g., by exchanging messages pursuant to a particular protocol. Such message exchange may advantageously be done prior to supplying said private IP address to the subscriber.

Pursuant to yet an embodiment, said network component comprises or is associated with an access node, a media gateway, a switching unit, a DSLAM or a PON OLT.

The problem stated above is also solved by a device comprising a and/or being associated with a processor unit and/or a hard-wired circuit and/or a logic device that is arranged such that the method as described herein is executable on said processor unit.

According to an embodiment, said device is a communication device or a network component, in particular a or being associated with an access node, a media gateway, a switching unit, a DSLAM or a PON OLT.

The problem stated supra is further solved by a communication system comprising the device as described herein.

Embodiments of the invention are shown and illustrated in the following figures:
- Fig.2: shows an Access Node (AN) that is connected via a line to the Internet, in particular to an edge router of the Internet (or of the carrier) and via several lines to several home routers, wherein the public IP address provided by the Internet is also used towards the home routers;
- Fig.3: shows the AN and a home router according to Fig.2, wherein the AN confers with the home router to determine whether the home router is capable of NAT processing.

This proposal suggests an efficient solution as how to avoid double NAT, i.e. at the carrier or provider and at the subscriber's premises.

In particular as the subscriber may already perform address translation at, e.g., a home router, for the subscriber's devices (e.g., PC, PDA, laptop, etc.), a carrier network component (e.g., a carrier NAT device) may convey a global IP address together with a port information towards the subscriber.

The global IP address may be the IP address the carrier NAT device has been supplied with from the Internet (such an IP address may be persistently stored with the NAT device or it may be dynamically generated or obtained from, e.g., a DHCP server of the Internet). The port information may comprise a range of TCP/UDP ports that is assigned to a particular subscriber.

This approach enables the carrier NAT device to convey the same global IP address to several subscribers together with a restriction regarding a number of available TCP/UDP ports.

This solution could be regarded as "NAT Delegation" as the carrier NAT device delegates the job of address translation to the home routers providing NAT functionality.

Advantageously, the carrier NAT device may perform NAT for a subscriber not supporting "NAT Delegation", i.e. a subscriber that is not capable of performing NAT.

To allow delegation of said NAT functionality from the carrier NAT device to the subscriber, e.g., a home router capable of processing NAT at the user's premises, a protocol may be defined and/or utilized to inform the home router about the IP address and/or port(s) to use.

This may be achieved by enhancing either PPP IPCP and/or DHCP to distribute the IP address as needed and in particular to allow using the IP address in combination with a limited and/or selected port range.

As an alternative, a new NAT delegation protocol may be defined allowing the carrier NAT device to communicate with the NAT capable home router. Advantageously, the carrier NAT device informs the home router about the IP Address and TCP/UDP ports to be used.

In case the carrier NAT device does not detect any NAT capable device at the customer's premises, the carrier NAT device may provide NAT functionality by itself. Connections to customers not supporting NAT can be set up and maintained as well as connections to those customers supporting NAT. Hence, the NAT processing load at the carrier NAT device can be reduced.

Said carrier NAT device may be a or be associated with a network component such as an access node, a DSLAM, a PON OLT or a (multimedia) gateway.

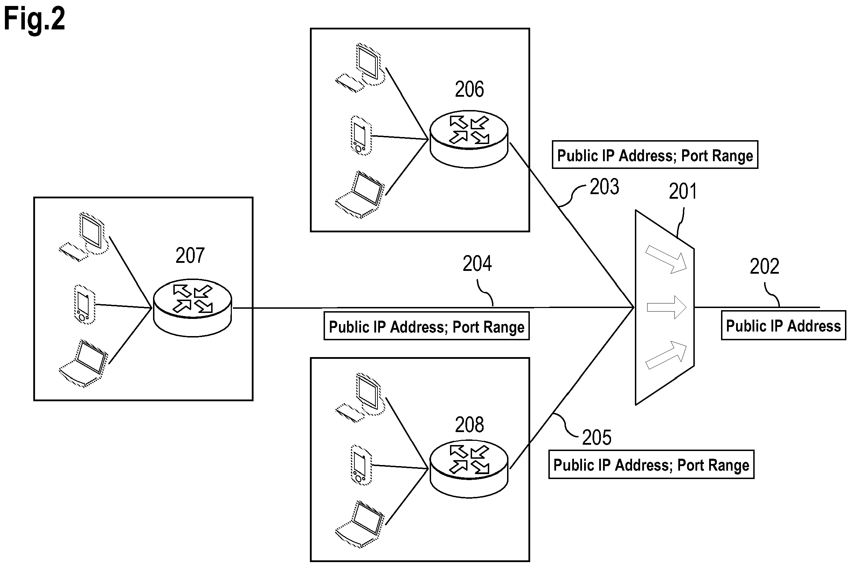

**Fig.2** shows a carrier NAT device or Access Node (AN) 201 that is connected via a line 202 to the Internet, in particular to an edge router of the Internet (or of the carrier).

In downstream direction (i.e. towards the subscribers), the AN 201 is connected via lines 203, 204 and 205 to three different home routers 206 to 208. Each home router 206 to 208 provides NAT functionality as described above and supplies several devices attaches to the particular home routers 206 to 208 (see also Fig.1 with regard to the home routers and the attached devices).

The carrier provides a public IP address to the AN 201. The AN 201 further conveys this public IP address together with a port range information towards the home routers 206 to 208. The AN 201 may not require any NAT functionality thereby significantly reducing the processing load at the AN 201.

The home routers 206 to 208 may provide a MAC address to the AN 201, e.g., during an initialization phase. The MAC address in combination with the IP address and the port information can be used to unambiguously identify a particular home router.

Thus, a layer-2 information (e.g., MAC address) and/or a layer-1 information (e.g., a port at the AN 201) can be used to identify the home routers by the AN 201.

The AN 201 may, e.g., act as a DHCP server for all home routers 206 to 208 attached conveying the same IP address. However, if one home router 206 to 208 is not capable of NAT, the AN 201 may provide a unique IP address instead, processing NAT translation for this particular subscriber.

As an alternative, the IP address supplied by the AN 201 towards said home routers 206 to 208 may be persistently configured and/or stored with said AN 201. In such case, the network does not have to provide the IP address via line 202.

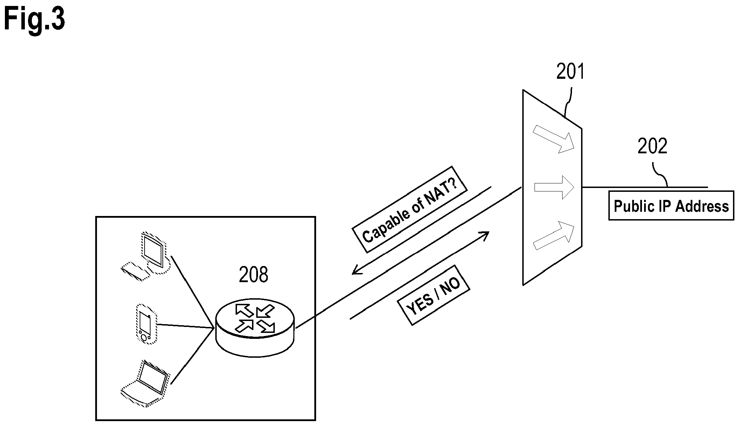

**Fig.3** shows the AN 201 and the home router 208 according to Fig.2, wherein the AN 201 sends a message to the home router 208 asking whether this particular subscriber is capable of NAT, in particular of the "NAT Delegation" service as described herein. The home router 208 may provide an acknowledge message within a predetermined period of time to inform the AN 201 about its capability of NAT processing. Otherwise, e.g., in case of a time-out (no response) or a negative acknowledgement, the AN 201 performs NAT for this particular subscriber.

### Further Advantages of NAT Delegation:

The device at the customer's premises (e.g., a home router or a residential gateway) does not have to be replaced, support for NAT Delegation can be introduced by a software and/or firmware upgrade.

Processing load for the carrier NAT device is significantly reduced as it does not have to process (and/or change) every packet sent and received by or for each subscriber. The carrier NAT device may merely check whether traffic from the subscriber is in a given TCP/UDP port range and forwards traffic to the subscriber based on the destination IP address and TCP/UDP port numbers.

The whole traffic of the subscriber is processed at one NAT stage instead of two NAT stages.

As the NAT functionality mainly is provided at the subscriber's device, pin holing is feasible and can be individually set up per subscriber.

### List of Abbreviations:

- DHCP: Dynamic Host Configuration Protocol
- DSLAM: Digital Subscriber Line Access Multiplexer
- IGMP: Internet Group Management Protocol
- IP: Internet Protocol
- IPCP: IP Control Protocol
- IPv4: Internet Protocol Version 4
- L2: Layer-2
- L3: Layer-3
- LIU: Line Interface Unit
- MAC: Media Access Control
- MG: Media Gateway
- MGC: Media Gateway Controller
- NAPT: Network address and port translation
- NAT: Network Address Translation
- OLT: Optical Line Termination
- PON: Passive Optical Network
- PPP: Point to Point Protocol
- RTP: Real-Time Transport Protocol
- SIP: Session Initiation Protocol
- TCP: Transfer control protocol
- UDP: User datagram protocol
- VGW: Virtual Gateway
- VoIP: Voice over IP

## Claims

1. A method for data processing in a network component,
- wherein a public IP address is provided from a network or from a carrier or from an operator,
- wherein the network component maps the public IP address to a private IP address and a port information associated with a subscriber, wherein the network component is connected in downstream direction to at least one subscriber,
- wherein the private IP address is supplied towards the subscriber together with said port information,
- wherein the private IP address is used to address several subscribers connected to the network component,
- wherein the network component confers with the subscriber whether it is capable of processing NAT and the network component performs NAT for any subscriber that is not capable of processing NAT, wherein a unique IP address is provided for each subscriber that is not capable of processing NAT and the private address is provided for each subscriber that is capable of processing NAT.

2. The method according to claim 1, wherein said public IP address equals said private IP address.

3. The method according to any of the preceding claims,
wherein said port information comprises at least one TCP/UDP port, in particular a range or TCP/UDP ports.

4. The method according to any of the preceding claims,
wherein the network component is connected to a network, in particular to the Internet or to an edge router of the Internet.

5. The method according to claim 4, wherein said public IP address is an IPv4 address, which is in particular assigned to the network component by the network.

6. The method according to any of claims 4 or 5, wherein said public IP address is provided from a DHCP server of the network.

7. The method according to any of the preceding claims,
wherein the network component processes VoIP data.

8. The method according to any of the preceding claims,
wherein said network component comprises an access node, a media gateway, a switching unit, a DSLAM or a PON OLT.

9. A device comprising at least one of the following: a processor unit, a hard-wired circuit, a logic device, that is arranged such that the method according to any of the preceding claims is executable thereon.

10. The device according to claim 9, wherein said device is a communication device or a network component, in particular an access node, a media gateway, a switching unit, a DSLAM or a PON OLT.

11. Communication system comprising the device according to any of claims 9 or 10.

## Patentansprüche

1. Verfahren zur Datenverarbeitung in einer Netzkomponente,
- wobei von einem Netz oder von einem Träger oder von einem Operator eine öffentliche IP-Adresse bereitgestellt wird,
- wobei die Netzkomponente die öffentliche IP-Adresse auf eine private IP-Adresse und auf Port-Informationen, die einem Teilnehmer zugeordnet sind, abbildet, wobei die Netzkomponente in einer Abwärtsstreckenrichtung mit wenigstens einem Teilnehmer verbunden ist,
- wobei die private IP-Adresse an den Teilnehmer zusammen mit den Port-Informationen geliefert wird,
- wobei die private IP-Adresse verwendet wird, um mehrere Teilnehmer, die mit der Netzkomponente verbunden sind, zu adressieren,
- wobei die Netzkomponente mit einem Teilnehmer berät, ob sie in der Lage ist, eine NAT zu verarbeiten, und die Netzkomponente für irgendeinen Teilnehmer, der keine NAT verarbeiten kann, eine NAT ausführt, wobei eine für jeden Teilnehmer, der keine NAT verarbeiten kann, eindeutige IP-Adresse bereitgestellt wird und für jeden Teilnehmer, der eine NAT verarbeiten kann, die private Adresse bereitgestellt wird.

2. Verfahren nach Anspruch 1, wobei die öffentliche IP-Adresse mit der der privaten IP-Adresse übereinstimmt.

3. Verfahren nach einem der vorhergehenden Ansprüche, wobei die Port-Informationen wenigstens einen TCP/UDP-Port, insbesondere einen Bereich von TCP/UDP-Ports, enthalten.

4. Verfahren nach einem der vorhergehenden Ansprüche, wobei die Netzkomponente mit einem Netz, insbesondere mit dem Internet oder mit einem Edge-Router des Internets, verbunden ist.

5. Verfahren nach Anspruch 4, wobei die öffentliche IP-Adresse eine IPv4-Adresse ist, die durch das Netz insbesondere der Netzkomponente zugewiesen ist.

6. Verfahren nach einem der Ansprüche 4 oder 5, wobei die öffentliche IP-Adresse von einem DHCP-Server des Netzes bereitgestellt wird.

7. Verfahren nach einem der vorhergehenden Ansprüche, wobei die Netzkomponente VoIP-Daten verarbeitet.

8. Verfahren nach einem der vorhergehenden Ansprüche, wobei die Netzkomponente einen Zugriffsknoten, ein Medien-Gateway, eine Vermittlungseinheit, einen DSLAM oder einen PON OLT umfasst.

9. Vorrichtung, die wenigstens eines des Folgenden enthält: eine Prozessoreinheit, eine physisch verdrahtete Schaltung, eine Logikvorrichtung, die so beschaffen ist, dass das Verfahren nach einem der vorhergehenden Ansprüche darin ausführbar ist.

10. Vorrichtung nach Anspruch 9, wobei die Vorrichtung eine Kommunikationsvorrichtung oder eine Netzkomponente, insbesondere ein Zugriffsknoten, ein Medien-Gateway, eine Vermittlungseinheit, ein DSLAM oder ein PON OLT, ist.

11. Kommunikationssystem, das die Vorrichtung nach einem der Ansprüche 9 oder 10 enthält.

## Revendications

1. Procédé de traitement de données dans un composant de réseau,
- dans lequel une adresse IP publique est fournie par un réseau ou par une porteuse ou par un opérateur,
- dans lequel le composant de réseau met en correspondance l'adresse IP publique avec une adresse IP privée et une information de port associée à un abonné, dans lequel le composant de réseau est connecté dans la direction aval à au moins un abonné,
- dans lequel l'adresse IP privée est délivrée à destination de l'abonné avec ladite information de port,
- dans lequel l'adresse IP privée est utilisée pour adresser plusieurs abonnés connectés au composant de réseau,
- dans lequel le composant de réseau évalue avec l'abonné s'il est capable de traiter un NAT et le composant de réseau réalise un NAT pour un abonné quelconque qui n'est pas capable de traiter un NAT, dans lequel une adresse IP unique est fournie pour chaque abonné qui n'est pas capable de traiter un NAT et l'adresse privée est fournie pour chaque abonné qui est capable de traiter un NAT.

2. Procédé selon la revendication 1, dans lequel ladite adresse IP publique est égale à ladite adresse IP privée.

3. Procédé selon l'une quelconque des revendications précédentes, dans lequel ladite information de port comprend au moins un port TCP/UDP, notamment une plage ou des ports TCP/UDP.

4. Procédé selon l'une quelconque des revendications précédentes, dans lequel le composant de réseau est connecté à un réseau, notamment à l'Internet ou à un routeur de périphérie de l'Internet.

5. Procédé selon la revendication 4, dans lequel ladite adresse IP publique est une adresse IPv4, qui est notamment attribuée au composant de réseau par le réseau.

6. Procédé selon l'une quelconque des revendications 4 ou 5, dans lequel ladite adresse IP publique est fournie par un serveur DHCP du réseau.

7. Procédé selon l'une quelconque des revendications précédentes, dans lequel le composant de réseau traite des données VoIP.

8. Procédé selon l'une quelconque des revendications précédentes, dans lequel ledit composant de réseau comprend un nœud d'accès, une passerelle multimédia, une unité de commutation, un DSLAM ou un OLT PON.

9. Dispositif comprenant au moins l'un des éléments suivants : une unité de traitement, un circuit câblé, un dispositif logique, qui est conçu de telle sorte que le procédé selon l'une quelconque des revendications précédentes soit exécutable sur celui-ci.

10. Dispositif selon la revendication 9, dans lequel ledit dispositif est un dispositif de communication ou un composant de réseau, notamment un nœud d'accès, une passerelle multimédia, une unité de commutation, un DSLAM ou un PON OLT.

11. Système de communication comprenant le dispositif selon l'une quelconque des revendications 9 ou 10.
